Europäisches Patentamt

European Patent Office

Office européen des brevets

(11) Publication number: **0 039 985**
A1

# EUROPEAN PATENT APPLICATION

(21) Application number: 81300160.9

(22) Date of filing: 14.01.81

(51) Int. Cl.³: **B 23 D 79/02**
B 29 C 17/12

(30) Priority: 12.05.80 GB 8015578

(43) Date of publication of application:
18.11.81 Bulletin 81/46

(84) Designated Contracting States:
BE DE FR IT NL

(71) Applicant: British Gas Corporation
Rivermill House 152 Grosvenor Road
London SW1V 3JL(GB)

(72) Inventor: Bradley, David Edward
33 Cutenhoe Road
Luton Bedfordshire(GB)

(74) Representative: Wallace, Walter
British Gas Corporation Patents Department 326 High
Holborn
London, WC1V 7PT(GB)

(54) Cutting tool.

(57) A cutting tool for cutting internally formed beads in welded plastic piping which comprises a shaft (1) on which is mounted a helical cutting blade (2). Forward of the cutting blade (2) is a grapnel (6) to retrieve the cutting bead (9).

In use, the tool is inserted down the bore of a pipe section until the leading edge of the cutting blade (2) abutts the bead. The blade is forced into the bead (9) by the pushing of the tool and then withdrawn from the bore of the pipe. The grapnel (6) engages the cut bead (9) which is withdrawn with the tool.

*FIG.1.*

EP 0 039 985 A1

Croydon Printing Company Ltd.

0039985

This invention relates to cutting tools and more particularly to a tool for cutting internal beading, formed during the butt welding of plastics pipe.

Plastics pipes for example, those made of polyethylene are increasingly being used for the distribution of domestic supply fluids, such as fuel gas and water. The use of plastics pipes is highly advantageous over the use of conventional metal piping, since they are not subject to corrosion and pipe lengths may be joined together simply by butt welding techniques, rather than the conventional and more elaborate and expensive threaded joint socket arrangement.

Butt welding is effected by first machining the ends of the two pipe sections to be joined and heating the two adjacent pipe ends to soften the plastic material. The two ends are then compressed for a period of time whilst the two mating faces fuse and cool down. The compressed forces on the mating faces are such that beads are formed both externally and internally at the mating interface. External beads do not present any problems; indeed they are advantageous in that they serve to provide extra support at the point of joining and hence strengthen the joint. Internal beads however, have a deleterious effect, in that a flow characteristics of the fluid in the pipe, when the pipe is in service, are disturbed at each pipe joint. Therefore, in order

to provide undisturbed fluid flow conditions, it has been necessary to remove these internal beads and complicated and expensive tools have been designed for the purpose of removing such beading.

The present invention provides a tool for cutting and retrieving internal beading which is both more economical to construct and simpler to construct than known tools.

Thus the present invention provides a cutting tool comprising a shaft bearing a concentrically mounted helical cutting blade and having mounted thereon, forward of said blade, a grapnel consisting of a plurality of radially extending arms, the radius of each arm being less than the radius defined by said blade.

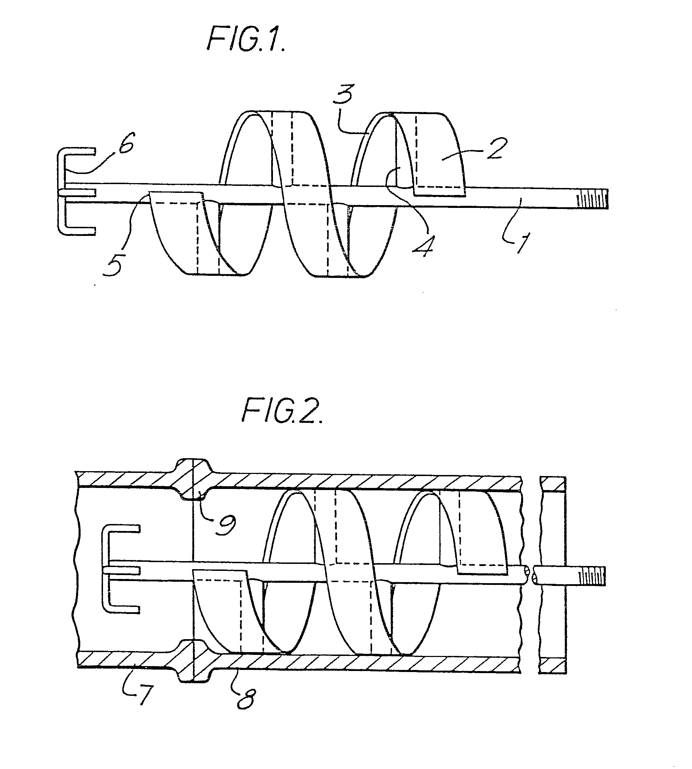

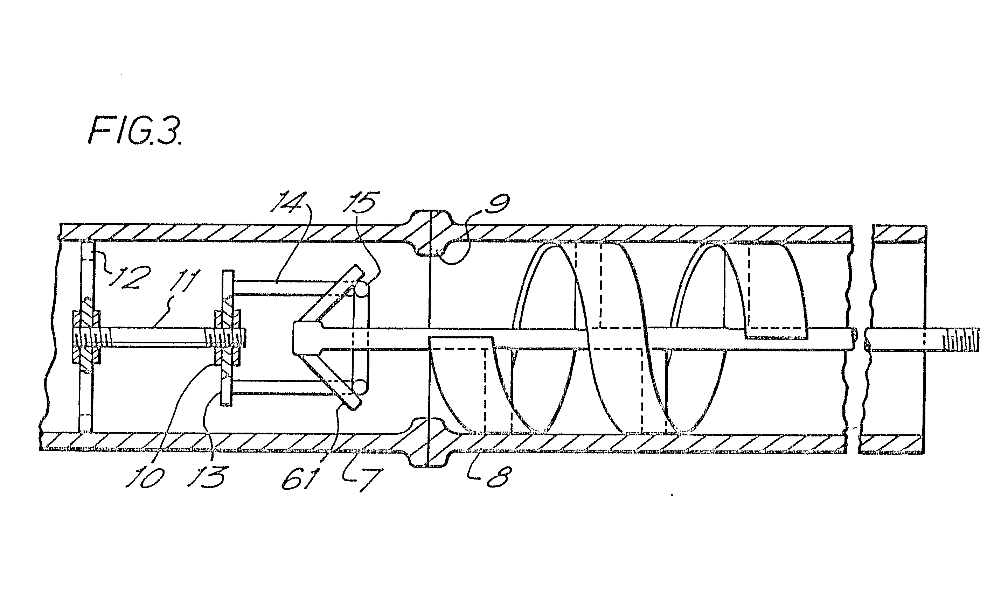

The invention will be described with reference to the accompanying drawings in which Figure 1 is a side elevation view of one form of tool in accordance with the invention, and Figure 2 is a sectional elevated view showing the tool of Figure 1 in use. Figure 3 is a side elevation view of an alternative form of the tool in use.

Referring to Figure 2, shaft 1 is provided with a helical blade 2, supported on the shaft by radial extending bearers 4. Mounted at the front end of the shaft, forward of the cutting edge 5 is the grapnel 6. The grapnel comprises of a number of radially extended arms, the ends of which may be (as shown) bent back along the axis of the shaft.

The cutting tool as shown in Figure 1 is used after two pipe sections (7 and 8 as shown in Figure 2) have been butt welded. The shaft 1 is longer than the length of pipe 8 and is inserted into the open end of the pipe until the leading edge 5 abutts the internal bead 9. It will be seen that the grapnel portions 6 extends through into pipe 7. The tool is withdrawn slightly and then rammed against the bead 9 cutting the bead. The bead is displaced in the pipe and upon withdrawal of the tool, is engaged by the claws of grapnel 6. The internal bead 9 is thus cut and removed completely from the pipe.

The tool of the present invention can be used for cutting internal beads from pipe sections which are currently conventionally used i.e. of about 12 metres in length.

- 4 -

Referring to Figure 3 the tool in principle is of the same construction as shown in Figure 1, except that the grapnel comprises a plurality of spring loaded radially extended arms. The purpose of the grapnel is to engage with another tool rather than only to remove the bead. This alternative form of tool is used in association with the conventional "pull-through" or "Badger" which is used to clean out the pipe bore.

In use, the Badger 10 is located in the already joined pipe section 7. The Badger comprises a shaft 11 at one end of which is mounted a circular scraper plate 12 the outer periphery at least of which is comprised of a rubbery flexible material. The diameter of plate 12 is approximately that of the pipe diameter. At the end of shaft 11 is mounted a supporting plate 13 which bears a plurality of rearwardly extended supporting arms 14. The arms support a latch ring 15 which may be an annular disc or of toroidal construction. The grapnel portion of the cutting tool comprising of a number of spring loaded arms 61 which are urged outwardly by springs.

- 4 -

The pipe section 8 to be joined is welded to section 7, as is described above and thereafter the cutting tool is inserted in the open end of pipe 8. The tool is moved down pipe 8 until arms 61 engage latch ring 15. Further movement of the tool causes the arms to retract until their ends pass through this ring, thereupon they open. The cutter is moved until the pipe beading is cut and then withdrawn from pipe 8 as described above, in this way not only is the beading section withdrawn from the pipe, but Badger 11 is pulled through the newly joined pipe section 8 and any debris in the pipe bore is removed.

0039985

Claim

1.  A cutting tool comprising a shaft bearing a
    concentrically mounted helical cutting blade
    and having mounted thereon, forward of said
    blade, a grapnel consisting of a plurality
    of radially extending arms, the radius of
    each arm being less than the radius defined
    by said blade.

2.  The cutting tool as claimed in Claim 1 therein
    the grapnel consists of a plurality of spring
    loaded arms.

3.  A pipe cleaning tool comprising a cutting tool
    as claimed in Claim 1 or Claim 2 in association
    with a "pull through" comprising a circular disc
    having a diameter of substantially the same of
    that of the pipe bore and wherein a periphery
    of the disc is made of a flexible rubbery material.

1/2

FIG.1.

FIG.2.

0039985

FIG.3.

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - C - 488 844 (REIMKE) <br> * Page 1, lines 31-65; figures * | 1 | B 23 D 79/02 <br> B 29 C 17/12 |
| | FR - A - 2 224 236 (TRIQUET) <br> * Page 2, line 35 - page 3, line 7; figures * | 1 | |
| | US - A - 2 354 289 (BABB) <br> * Page 2, left-hand column, lines 6-50; figures * | 1 | **TECHNICAL FIELDS SEARCHED (Int. Cl³)** |
| | RESEARCH DISCLOSURE, July 1973 Hampshire, GB "Scraper device", pages 6,7 * <br> * Page 6, figures * | 1,3 | B 23 D 79/00 <br> B 29 C 17/00 <br> B 21 C 37/00 |
| | US - A - 3 868 773 (PROVINCE) <br> * Column 1, line 56 - column 2, line 33; figures * | 1,2 | |
| | US - A - 3 108 374 (BOWMAN) <br> * Column 2, lines 17-45; figures * | 1 | **CATEGORY OF CITED DOCUMENTS** <br> X: particularly relevant <br> A: technological background <br> O: non-written disclosure <br> P: intermediate document <br> T theory or principle underlying the invention <br> E. conflicting application <br> D: document cited in the application <br> L. citation for other reasons |
| | US - A - 4 084 484 (SHKLYANOV) <br> * Column 3, lines 12-18; figures * | 3 | |
| | ./. | | &. member of the same patent family, corresponding document |

The present search report has been drawn up for all claims

| Place of search | Date of completion of the search | Examiner |
|---|---|---|
| The Hague | 10-08-1981 | HORVATH |

EPO Form 1503.1  06.78

European Patent Office

EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 463 639 (ELEKTRO-STALSKY)<br><br>* Page 2, lines 68-118; figures* <br><br>---- | 3 | |
| | | | **TECHNICAL FIELDS SEARCHED (Int. Cl.³)** |

EPO Form 1503.2   06.78